(19)

Europäisches
Patentamt
European
Patent Office
Office européen
des brevets

(11)  EP 4 752 451 A1

(12)  **EUROPEAN PATENT APPLICATION**
published in accordance with Art. 153(4) EPC

(43) Date of publication:
03.06.2026  Bulletin 2026/23

(21) Application number: 24850600.8

(22) Date of filing: 30.04.2024

(51) International Patent Classification (IPC):
$F24F\ 11/65^{(2018.01)}$   $F24F\ 11/64^{(2018.01)}$
$F24F\ 12/00^{(2006.01)}$   $F24F\ 5/00^{(2006.01)}$
$F25B\ 13/00^{(2006.01)}$   $F25B\ 29/00^{(2006.01)}$
$F24H\ 4/02^{(2022.01)}$   $F24H\ 15/429^{(2022.01)}$

(52) Cooperative Patent Classification (CPC):
Y02B 30/56

(86) International application number:
PCT/CN2024/090973

(87) International publication number:
WO 2025/030945 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  07.08.2023  CN 202310988387

(71) Applicants:
• GD Midea Air-Conditioning Equipment Co., Ltd.
Foshan, Guangdong 528311 (CN)
• Midea Group Co., Ltd.
Foshan, Guangdong 528311 (CN)

(72) Inventors:
• ZHANG, Hao
Foshan, Guangdong 528311 (CN)

• SHAO, Yanpo
Foshan, Guangdong 528311 (CN)
• TAO, Kui
Foshan, Guangdong 528311 (CN)
• LI, Shunquan
Foshan, Guangdong 528311 (CN)
• LEI, Junjie
Foshan, Guangdong 528311 (CN)
• MA, Yuexin
Foshan, Guangdong 528311 (CN)
• XU, Ke
Foshan, Guangdong 528311 (CN)

(74) Representative: Ran, Handong
Maucher Jenkins
Seventh Floor Offices
Artillery House
11-19 Artillery Row
London SW1P 1RT (GB)

(54)  **AIR CONDITIONER CONTROL METHOD AND APPARATUS, MULTI-SPLIT AIR CONDITIONER, AND STORAGE MEDIUM**

(57)     The present application provides an air conditioner control method and apparatus, a multi-split air conditioner, and a storage medium. According to the present application, when the multi-split air conditioner has a refrigeration requirement and a water heating requirement at the same time, mode determination is performed on the basis of a water tank temperature and a heating energy requirement of a heating water tank, and a total energy requirement of all air conditioner indoor units that are acquired, so as to determine a target heat recovery mode of the multi-split air conditioner, and then communication states between reversing apparatuses and throttling elements are adjusted on the basis of the target heat recovery mode.

obtaining, in response to the air conditioner having both cooling and hot water production demands, a water tank temperature of the hot water tank, a heating demand, and a total energy demand of the indoor units — S10

determining a target heat recovery mode of the air conditioner according to the water tank temperature, the heating demand, and the total energy demand of the indoor units — S20

adjusting, according to the target heat recovery mode, a communication state of each reversing device and the throttling element, to adjust a refrigerant flow ratio between the hot water tank and the indoor heat exchanger — S30

FIG. 2

**Description**

**CROSS-REFERENCE TO RELATED APPLICATIONS**

This application claims priority to Chinese Patent Application No. 202310988387.5, filed on August 7, 2023, the entire contents of which are incorporated herein by reference.

**TECHNICAL FIELD**

The present application relates to the technical field of air conditioners, and in particular to a method for controlling an air conditioner, an apparatus, a multi-split air conditioner and a storage medium.

**BACKGROUND**

A multi-split hot water system is generally configured with a plurality of air conditioner indoor units and one or more hot water modules. The indoor units are used for regulating temperatures of respective rooms, and the hot water modules are used for providing domestic hot water. Since the indoor units and the hot water modules share a single heat pump system, when ambient temperature is relatively high in summer and the indoor units operate in a cooling mode, hot water production of the hot water modules cannot be carried out simultaneously.

The above content is provided solely to assist in understanding the technical solution of the present application and does not constitute an admission that the above content is prior art.

**SUMMARY**

The main objective of the present application is to provide a method for controlling an air conditioner, an apparatus, a multi-split air conditioner and a storage medium, aiming to solve the technical problem in the prior art that heating and hot water production cannot be carried out simultaneously in a multi-split air conditioner.

In order to achieve the above objective, the present application provides a method for controlling an air conditioner applied to a multi-split air conditioner. The multi-split air conditioner includes an outdoor unit; a plurality of indoor units; and a hot water module, the outdoor unit is connected to each indoor unit and the hot water module respectively, and a throttling element is provided between the outdoor unit and each indoor unit and between the outdoor unit and the hot water module respectively, where the outdoor unit includes a compressor; an outdoor heat exchanger; and at least two reversing devices, each indoor unit includes an indoor heat exchanger, the hot water module includes a hot water tank, and each reversing device is connected to the compressor for controlling a refrigerant flow direction.

The method includes the following steps:

obtaining, in response to the air conditioner having both cooling and hot water production demands, a water tank temperature of the hot water tank, a heating demand, and a total energy demand of the indoor units;

determining a target heat recovery mode of the air conditioner according to the water tank temperature, the heating demand, and the total energy demand of the indoor units; and

adjusting, according to the target heat recovery mode, a communication state of each reversing device and the throttling element, to adjust a refrigerant flow ratio between the hot water tank and the indoor heat exchanger.

In an embodiment, the target heat recovery mode includes a partial heat recovery mode, and the water tank temperature includes a water temperature in the water tank and a temperature at a center of a water tank coil;

where the determining the target heat recovery mode of the air conditioner according to the water tank temperature, the heating demand, and the total energy demand of the indoor units includes:

determining whether the water temperature in the hot water tank, the temperature at the center of the water tank coil, the heating demand, and the total energy demand of the indoor units satisfy preset heat recovery conditions, the preset heat recovery conditions including at least one of the following: the water temperature in the hot water tank being greater than a preset first temperature threshold, the temperature at the center of the water tank coil being greater than or equal to a preset coil temperature, and a target heating demand ratio being greater than or equal to a preset demand ratio, where the target heating demand ratio is a ratio of the total energy demand of the indoor units to the heating demand; and

in response to determining that the preset heat recovery conditions are satisfied, determining that the air conditioner operates in the partial heat recovery mode.

In an embodiment, the target heat recovery mode further includes a full heat recovery mode;
where the determining the target heat recovery mode of the air conditioner according to the water tank temperature, the heating demand, and the total energy demand of the indoor units further includes:

in response to the water temperature in the hot water tank being lower than a preset second temperature threshold, the temperature at the center of the water tank coil being lower than the preset coil temperature, and a target heating demand ratio being lower than the preset demand ratio, determining that the air conditioner operates in the full heat recovery mode, where the preset second temperature threshold is lower than the preset first temperature threshold; and

in response to the water temperature in the hot water tank being lower than the preset first temperature threshold and greater than or equal to the preset second temperature threshold, determining the target heat recovery mode according to a heat recovery mode in a previous operation.

In an embodiment, when two reversing devices are provided in the outdoor unit, the reversing devices include a first reversing device and a second reversing device, the first reversing device is respectively connected to the compressor, the outdoor heat exchanger, and the hot water tank, and the second reversing device is respectively connected to the compressor, the indoor heat exchanger, and the hot water tank;
where the adjusting the communication state of each reversing device according to the target heat recovery mode includes:
in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger through the first reversing device.

In an embodiment, the method for controlling the air conditioner further includes:
in response to the target heat recovery mode being the full heat recovery mode, communicating a second selection terminal and a third selection terminal in the first reversing device, such that a refrigerant input terminal of the compressor communicates with a refrigerant output terminal of the outdoor heat exchanger through the first reversing device.

In an embodiment, when three reversing devices are provided in the outdoor unit, the reversing devices include a first reversing device, a second reversing device, and a third reversing device, the first reversing device is respectively connected to the compressor and the outdoor heat exchanger, the second reversing device is respectively connected to the compressor and the indoor heat exchanger, and the third reversing device is respectively connected to the compressor and the hot water tank;
where the adjusting the communication state of each reversing device according to the target heat recovery mode further includes:

in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger; and
communicating a first selection terminal and a second selection terminal in the third reversing device, such that the refrigerant output terminal of the compressor communicates with a refrigerant input terminal of the hot water tank through the third reversing device.

In an embodiment, the method for controlling the air conditioner further includes:

in response to the target heat recovery mode being the full heat recovery mode, communicating a second selection terminal and a third selection terminal in the first reversing device, such that a refrigerant input terminal of the compressor communicates with a refrigerant output terminal of the outdoor heat exchanger through the first reversing device; and
communicating a first selection terminal and a second selection terminal in the third reversing device, such that the refrigerant output terminal of the compressor communicates with a refrigerant input terminal of the hot water tank through the third reversing device.

In addition, to achieve the above objective, the present application further provides an apparatus for controlling an air conditioner, including:

an acquisition module configured to obtain, in response to the air conditioner having both cooling and hot water production demands, a water tank temperature of the hot water tank, a heating demand, and a total energy demand of the indoor units;

a determination module configured to determine a target heat recovery mode of the air conditioner according to the water tank temperature, the heating demand, and the total energy demand of the indoor units; and

an adjustment module configured to adjust, according to the target heat recovery mode, a communication state of each reversing device and the throttling element, to adjust a refrigerant flow ratio between the hot water tank and the indoor heat exchanger.

In addition, to achieve the above objective, the present application further provides a multi-split air conditioner, including: a memory, a processor, and a program for controlling an air conditioner stored in the memory and executable by the processor, where the program for controlling an air conditioner is configured to implement the method for controlling the air conditioner described above.

In addition, to achieve the above objective, the present application further provides a storage medium storing a program for controlling an air conditioner, which, when executed by a processor, implements the method for controlling the air conditioner described above.

The present application determines a target heat recovery mode of a multi-split air conditioner by performing mode determination based on a water tank temperature of a hot water tank, a heating demand, and a total energy demand of indoor units when cooling and hot water production demands exist simultaneously in the multi-split air conditioner, and then adjusts communication states of reversing devices and throttling elements according to the target heat recovery mode, thereby enabling cooling and hot water production to be carried out simultaneously by a single heat pump system, heating the hot water tank by using waste heat generated during air conditioning cooling, avoiding the technical problem in the prior art that heating and hot water production cannot be carried out simultaneously in a multi-split air conditioner, and improving user experience.

## BRIEF DESCRIPTION OF THE DRAWINGS

FIG. 1 is a schematic structural diagram of a multi-split air conditioner in a hardware operating environment involved in an embodiment of the present application.

FIG. 2 is a flowchart of a method for controlling the air conditioner according to a first embodiment of the present application.

FIG. 3 is a schematic structural diagram of a multi-split air conditioner with two reversing devices operating in a partial heat recovery mode of the method for controlling the air conditioner according to an embodiment of the present application.

FIG. 4 is a schematic structural diagram of a multi-split air conditioner with two reversing devices operating in a full heat recovery mode of the method for controlling the air conditioner according to an embodiment of the present application.

FIG. 5 is a schematic diagram illustrating determination of a capacity demand interval of the method for controlling the air conditioner according to an embodiment of the present application.

FIG. 6 is a flowchart of the method for controlling the air conditioner according to a second embodiment of the present application.

FIG. 7 is a flowchart of the method for controlling the air conditioner according to a third embodiment of the present application.

FIG. 8 is a flowchart of the method for controlling the air conditioner according to a fourth embodiment of the present application.

FIG. 9 is a schematic structural diagram of a multi-split air conditioner with three reversing devices operating in a partial heat recovery mode of the method for controlling the air conditioner according to an embodiment of the present application.

FIG. 10 is a schematic structural diagram of a multi-split air conditioner with three reversing devices operating in a partial heat recovery mode of the method for controlling the air conditioner according to an embodiment of the present application.

FIG. 11 is a schematic block diagram of an apparatus for controlling the air conditioner according to a first embodiment of the present application.

Description of reference signs:

| Reference signs | Name | Reference signs | Name |
|---|---|---|---|
| 1 | outdoor unit | LA | hydraulic valve |
| 2 | indoor unit | GA | air pressure valve |

(continued)

| Reference signs | Name | Reference signs | Name |
|---|---|---|---|
| 3 | hot water module | 121 | first reversing device |
| 11 | compressor | 122 | second reversing device |
| 12 | reversing device | 123 | third reversing device |
| 13 | outdoor heat exchanger | 31 | hot water tank |
| EXV | electronic expansion valve | | |

The realization of the purposes, functional features, and advantages of the present application will be further explained in conjunction with embodiments and with reference to the accompanying drawings.

## DETAILED DESCRIPTION OF THE EMBODIMENTS

It should be understood that the specific embodiments described herein are merely for explaining the present application and are not intended to limit the present application.

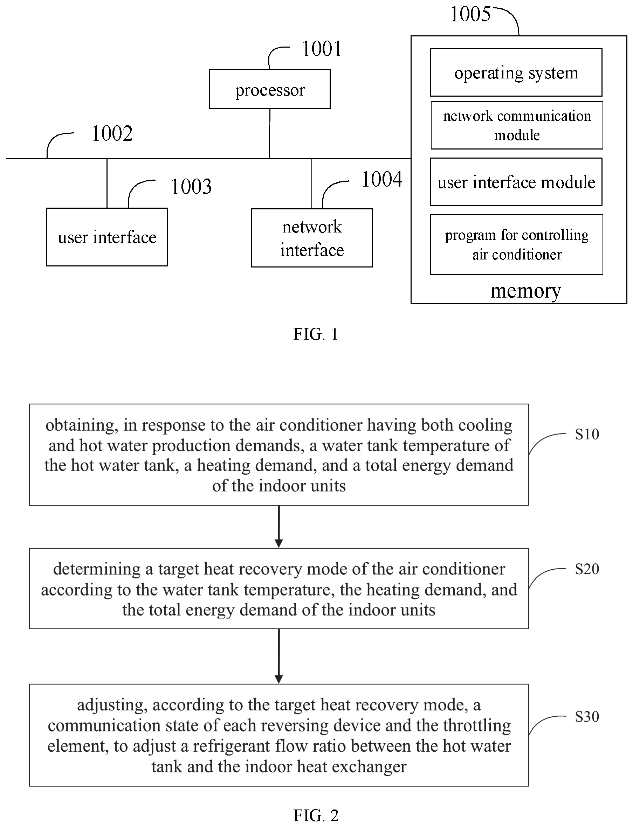

According to FIG. 1, FIG. 1 is a schematic structural diagram of a multi-split air conditioner in a hardware operating environment involved in an embodiment of the present application.

As shown in FIG. 1, in an embodiment, the multi-split air conditioner includes a processor 1001, such as a Central Processing Unit (CPU), a communication bus 1002, a user interface 1003, a network interface 1004, and a memory 1005. The communication bus 1002 is configured to implement connection and communication among the components. In an embodiment, the user interface 1003 includes a display and an input unit such as a keyboard, and the user interface 1003 further includes standard wired interfaces and wireless interfaces. In an embodiment, the network interface 1004 includes standard wired interfaces and wireless interfaces, such as a Wireless-Fidelity (Wi-Fi) interface. In an embodiment, the memory 1005 is a high-speed Random Access Memory (RAM), or is a stable Non-Volatile Memory (NVM), such as a disk storage. In an embodiment, the memory 1005 is a storage device independent of the processor 1001.

Those skilled in the art may understand that the structure shown in FIG. 1 does not constitute a limitation on the multi-split air conditioner, and the multi-split air conditioner may include more or fewer components than those shown, or some components may be combined, or different component arrangements may be adopted.

As shown in FIG. 1, in an embodiment, the memory 1005 serving as a storage medium includes an operating system, a network communication module, a user interface module, and a program for controlling an air conditioner.

In the multi-split air conditioner shown in FIG. 1, in an embodiment, the network interface 1004 is mainly used for data communication with a network server, and the user interface 1003 is mainly used for data interaction with a user. In an embodiment, the processor 1001 and the memory 1005 of the multi-split air conditioner are provided in the multi-split air conditioner, and the multi-split air conditioner invokes, through the processor 1001, the program for controlling an air conditioner stored in the memory 1005 and executes the method for controlling an air conditioner provided in the embodiments of the present application.

In an embodiment, the present application provides a method for controlling an air conditioner. As shown in FIG. 2, FIG. 2 is a schematic flowchart of a first embodiment of the method for controlling the air conditioner of the present application.

In this embodiment, the method for controlling the air conditioner includes the following steps:

Step S10, obtaining, in response to the air conditioner having both cooling and hot water production demands, a water tank temperature of the hot water tank, a heating demand, and a total energy demand of the indoor units.

In an embodiment, an execution subject may be the air conditioner device. The air conditioner device has functions of data processing, data communication, and program execution. The air conditioner device may be a controller of the multi-split air conditioner. In an embodiment, the execution subject may alternatively be another device having similar functions, and the present embodiment does not impose limitations on this. For ease of description, the controller of the multi-split air conditioner is taken as an example for description in this embodiment.

The air conditioner in this embodiment refers to a multi-split air conditioner. The multi-split air conditioner includes one outdoor unit connected to a plurality of indoor units, and is capable of simultaneously adjusting parameters such as air temperature, humidity, cleanliness, and air flow rate in a plurality of rooms. The multi-split air conditioner includes, but is not limited to, operating modes such as cooling, heating, and fresh air circulation.

In an embodiment, the multi-split air conditioner includes an outdoor unit, indoor units, and a hot water module. The outdoor unit is connected to each indoor unit and the hot water module respectively. The outdoor unit includes a compressor, an outdoor heat exchanger, and at least two reversing devices. Each indoor unit includes at least one indoor heat exchanger. A hot water tank is arranged at an end of the hot water module. Each reversing device is connected to the

5

compressor and is mainly used to control a refrigerant flow direction in the multi-split air conditioner, and the reversing device is a four-way valve or a three-way valve, and no limitation is imposed in this embodiment.

In addition, throttling elements are provided between the outdoor unit and each indoor unit and between the outdoor unit and the hot water module. The throttling elements include electronic expansion valves and capillary tubes. In an embodiment, an electronic expansion valve is taken as an example for description. The throttling elements between the outdoor unit and each indoor unit and between the outdoor unit and the hot water module include a main-path electronic expansion valve and branch-path electronic expansion valves corresponding to each indoor unit or the hot water module, and no limitation is imposed in this embodiment.

It may be understood that, in the multi-split air conditioner of this embodiment, structural connections of the multi-split air conditioner differ according to a number of reversing devices provided. In an embodiment, two reversing devices are taken as an example for description. The reversing devices include a first reversing device and a second reversing device. A refrigerant output terminal of the compressor is connected to the first reversing device and the second reversing device respectively. According to different heat recovery modes of the multi-split air conditioner, a refrigerant flow ratio in pipelines is adjusted by communicating the reversing devices to adjust a refrigerant flow direction.

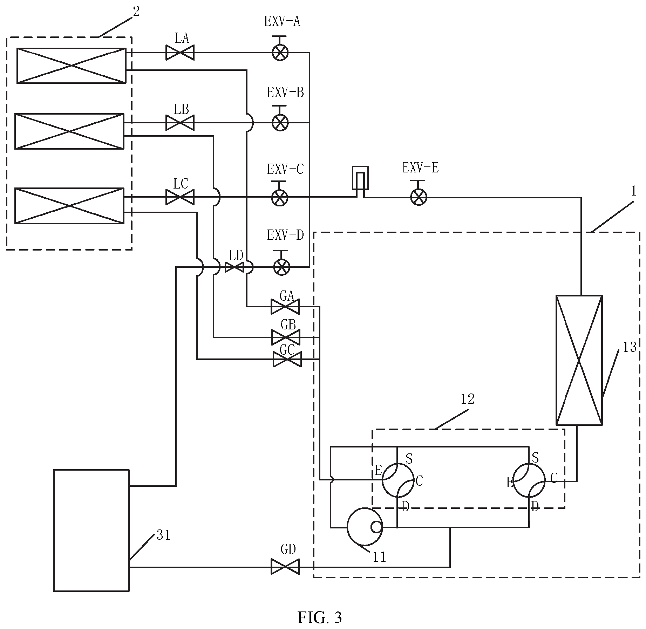

For ease of description, in an embodiment, the reversing device is a four-way valve. A refrigerant output terminal of the compressor communicates with selection terminal D of a first four-way valve and selection terminal D of a second four-way valve respectively, and the refrigerant output terminal of the compressor further directly communicates with the hot water tank. As shown in FIG. 3, in the partial heat recovery mode, selection terminal D of the first four-way valve communicates with selection terminal C, and selection terminal S communicates with selection terminal E, and selection terminal D of the second four-way valve communicates with selection terminal C, and selection terminal S communicates with selection terminal E, so that high-temperature and high-pressure refrigerant is divided into two paths. One path performs condensation through the outdoor heat exchanger, then flows through a main-path electronic expansion valve, and flows through the indoor heat exchanger for evaporation to complete cooling of the indoor units. The other path directly flows into the hot water tank through pipelines and exchanges heat with the hot water tank to achieve hot water production, then undergoes pressure reduction through a branch-path electronic expansion valve corresponding to the hot water module, and merges with refrigerant from the main path, flows through an electronic expansion valve corresponding to the indoor units, and flows through the indoor heat exchanger for evaporation, and finally returns to the compressor through the indoor heat exchanger and the second four-way valve, thereby synchronously completing cooling of the indoor units and hot water production of the hot water tank.

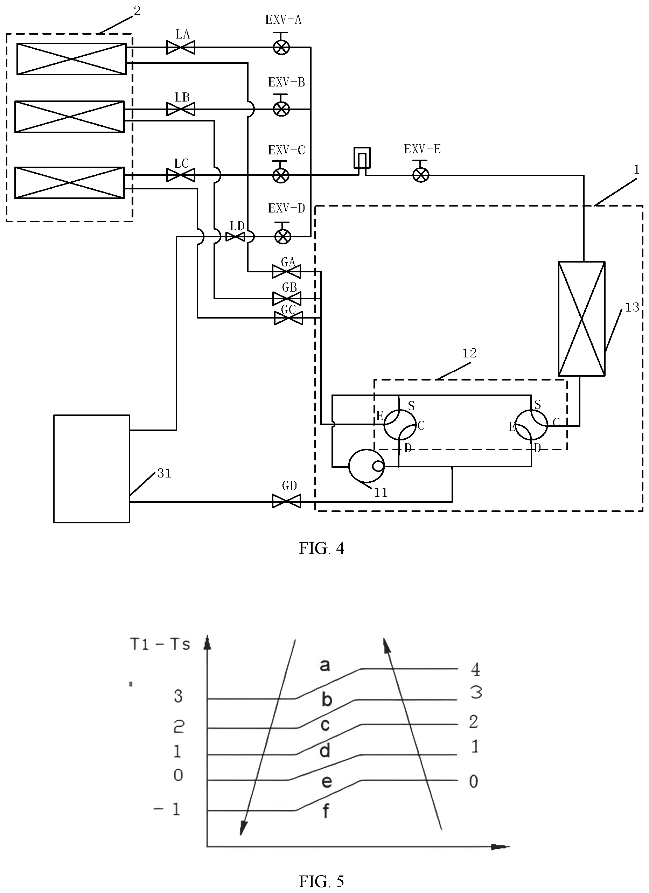

As shown in FIG. 4, in the full heat recovery mode, selection terminal D of the first four-way valve communicates with selection terminal E, and selection terminal C communicates with selection terminal S, and selection terminal D of the second four-way valve communicates with selection terminal C, and selection terminal S communicates with selection terminal E, so that all high-temperature and high-pressure refrigerant performs heat exchange through refrigerant pipelines in which the hot water tank is located. After the refrigerant passes through the hot water tank, the refrigerant is divided into two paths through a branch-path electronic expansion valve corresponding to the hot water module. One path flows through a main-path electronic expansion valve, flows through the outdoor heat exchanger for evaporation, and returns to the compressor through the first four-way valve. The other path flows through an electronic expansion valve corresponding to a branch in which the indoor units are located, flows through the indoor heat exchanger for evaporation to achieve a cooling effect of the indoor units, and then returns to the compressor through the second four-way valve, thereby synchronously completing cooling of the indoor units and hot water production of the hot water tank.

In an embodiment, the application scenario is summer heat pump cooling. In order to achieve hot water production in such a scenario, in the related art, electric heating is generally performed on the hot water tank. The electric heating manner has high energy consumption and does not achieve recovery of waste heat of the air conditioner.

It may be understood that a water tank temperature of the hot water tank includes, but is not limited to, a water temperature in the hot water tank and a temperature at a center of a water tank coil. A value of the water tank temperature may be an average value between a water temperature at an upper portion of the hot water tank and a water temperature at a lower portion of the hot water tank. The temperature at the center of the water tank coil refers to a refrigerant saturation temperature according to a discharge pressure of the compressor. In an embodiment, the refrigerant saturation temperature is related to factors such as a refrigerant type and a refrigerant pressure, and is mainly used for temperature control, heat exchange, and improvement of energy efficiency. Considering that pressure loss exists when the refrigerant passes through various heat exchange components and that substantially no pressure loss exists when the refrigerant is transmitted in pipelines, in an embodiment, the temperature at the center of the coil of the hot water tank directly connected to a refrigerant output terminal of the compressor is used as the refrigerant saturation temperature according to the discharge pressure.

It may be understood that a heating demand of the hot water tank is obtained through calculation according to a capability requirement coefficient of the hot water tank and a rated capability of the hot water tank. A calculation formula of the heating demand of the hot water tank is as follows:

$$Q_w = H_w * A_w$$

$Q_w$ refers to the heating demand of the hot water tank, $A_w$ refers to a capability requirement coefficient of the hot water tank and is related to a water temperature and an outdoor ambient temperature, and $H_w$ refers to a rated capability of the hot water tank.

It should be understood that obtaining the heating demand of the hot water tank includes: querying a capability requirement coefficient corresponding to the water temperature in the hot water tank and an outdoor ambient temperature; and calculating the heating demand of the hot water tank according to the capability requirement coefficient and a rated capability of the hot water tank.

When querying the capability requirement coefficient corresponding to the water temperature in the hot water tank and the outdoor ambient temperature, reference may be made to Table 1.

Table 1

| Aw | | Tw (°C) | | | | | |
|---|---|---|---|---|---|---|---|
| | | Tw<15 | 15≤Tw≤25 | 25 < Tw≤35 | 35 < Tw≤45 | 45 < Tw≤50 | Tw > 50 |
| T4(°C) | T4<5 | 2.6 | 2.4 | 2.2 | 2 | 1.8 | 1.6 |
| | 5≤T4≤15 | 2.4 | 2.2 | 2 | 1.8 | 1.6 | 1.4 |
| | 15<T4≤25 | 2.2 | 2 | 1.8 | 1.6 | 1.4 | 1.2 |
| | 25<T4≤35 | 2 | 1.8 | 1.6 | 1.4 | 1.2 | 1 |
| | 35<T4≤40 | 1.8 | 1.6 | 1.4 | 1.2 | 1 | 0.8 |
| | T4 > 40 | 1.6 | 1.5 | 1.4 | 1 | 0.8 | 0.6 |

In an embodiment, a rated capability of the hot water tank is positively correlated with a capacity of the hot water tank. A larger capacity of the hot water tank corresponds to a larger rated capability. For example, when the hot water tank has a capacity of 150 L, a corresponding rated capability of the hot water tank is 2.8 KW, and when the hot water tank has a capacity of 200 L, a corresponding rated capability of the hot water tank is 3.6 KW. No limitation is imposed in this embodiment.

It should be noted that a total energy demand of the indoor units may be a total energy demand of indoor units having an energy demand requirement. When obtaining the total energy demand of the indoor units, calculation may be performed according to the following formula:

$$\sum Q_c = \text{Reference value} * HP * K\_fan$$

The reference value is related to a difference between an indoor ambient temperature and an indoor ambient set temperature. HP refers to a preset correction value corresponding to a type of the indoor units. K_fan refers to a fan speed correction coefficient of each indoor unit.

In an embodiment, obtaining the total energy demand of the indoor units includes: obtaining a set temperature corresponding to each indoor unit and an indoor ambient temperature of an area in which the indoor unit is located; determining a temperature difference between the indoor ambient temperature and the set temperature; querying a target capability interval corresponding to the temperature difference; determining a corresponding reference value according to the target capability interval; determining a corresponding fan speed correction coefficient according to a fan rotation speed of each indoor unit; determining a preset correction value according to a model of each indoor unit; and calculating the total energy demand of the indoor units according to the reference value, the preset correction value, and the fan speed correction coefficient. The querying the capability interval corresponding to the temperature difference may refer to FIG. 5, and determining the reference value according to the capability interval may refer to Table 2.

Table 2

| Capability interval | interval a | interval b | interval c | interval d | interval e | interval f |
|---|---|---|---|---|---|---|
| Reference value | 3 | 2 | 1.5 | 1 | 0.5 | 0 |

In an embodiment, in practical applications, since a fan rotation speed of the indoor units may vary, when calculating the fan speed correction coefficient, in order to reduce a calculation amount, the fan speed correction coefficient may be calculated according to a fan speed level set by a user. Generally, a larger fan speed level corresponds to a larger correction coefficient. In a specific calculation process, reference may be made to Table 3.

Table 3

| Indoor unit operating conditions | | Correction coefficient |
| --- | --- | --- |
| Received indoor unit fan speed | Powerful | C_AIR_S |
| | High | C_AIR_H |
| | Middle | C_AIR_M |
| | Low | C_AIR_L |

Step S20, determining a target heat recovery mode of the air conditioner according to the water tank temperature, the heating demand, and the total energy demand of the indoor units.

It may be understood that, in this embodiment, heat recovery modes of the multi-split air conditioner include a partial heat recovery mode and a full heat recovery mode. The partial heat recovery mode refers to dividing high-temperature and high-pressure refrigerant at a refrigerant outlet of the compressor into two parts, one part passing through the outdoor heat exchanger and the other part flowing through the hot water tank for heating. The full heat recovery mode refers to causing all high-temperature and high-pressure refrigerant at the refrigerant outlet of the compressor to pass through the hot water tank for heat recovery and heating.

Step S30, adjusting, according to the target heat recovery mode, a communication state of each reversing device and the throttling element, to adjust a refrigerant flow ratio between the hot water tank and the indoor heat exchanger.

It should be understood that, when evaporative heat absorption of the indoor units in the multi-split air conditioner is greater than or equal to indoor-side heat and greater than heat required for heating water in the hot water tank, waste heat generated during operation of the air conditioner is capable of supporting heating of the hot water tank. In such a case, the multi-split air conditioner operates in the partial heat recovery mode, and refrigerant flows from the first four-way valve through the outdoor heat exchanger and directly flows through the hot water tank for heating.

When evaporative heat absorption of the indoor units in the multi-split air conditioner is less than indoor-side heat and greater than heat required for heating water in the hot water tank, waste heat generated during operation of the air conditioner is incapable of supporting heating of the hot water tank. In such a case, if an electric auxiliary heating device is not activated, communication of the four-way valve may be adjusted so that more high-temperature and high-pressure refrigerant directly flows into the hot water tank for heating, thereby increasing a temperature of the hot water tank.

In an embodiment, refrigerant flow directions of the two heat recovery modes differ significantly, in particular a refrigerant flow direction of the outdoor heat exchanger of the outdoor unit. In order to achieve accurate division of a refrigerant flow ratio under different heat recovery modes, in this embodiment, opening degrees of throttling elements are adjusted to implement pressure-difference shunting of refrigerant under different modes. For example, in the partial heat recovery mode, a main-path electronic expansion valve EXV-E is subjected to refrigerant pressure from the outdoor heat exchanger and refrigerant pressure from the hot water tank. In such a case, opening degrees of electronic expansion valves are adjusted so that refrigerant from the hot water tank does not flow reversely to the outdoor heat exchanger, and refrigerant in two paths is distributed through branch-path electronic expansion valves corresponding to the indoor units.

In an embodiment, when the multi-split air conditioner has both cooling and hot water production demands, a mode determination is performed according to the obtained water tank temperature of the hot water tank, the heating demand, and the total energy demand of the indoor units to determine a target heat recovery mode of the multi-split air conditioner. Then, a connection state of reversing devices and throttling elements is adjusted according to the target heat recovery mode, so as to achieve simultaneous operation of cooling and hot water production by one heat pump system, and to heat the hot water tank by waste heat generated during air conditioner cooling, thereby avoiding a technical problem in the related art that cooling and hot water production are not performed simultaneously in a multi-split air conditioner and improving user experience.

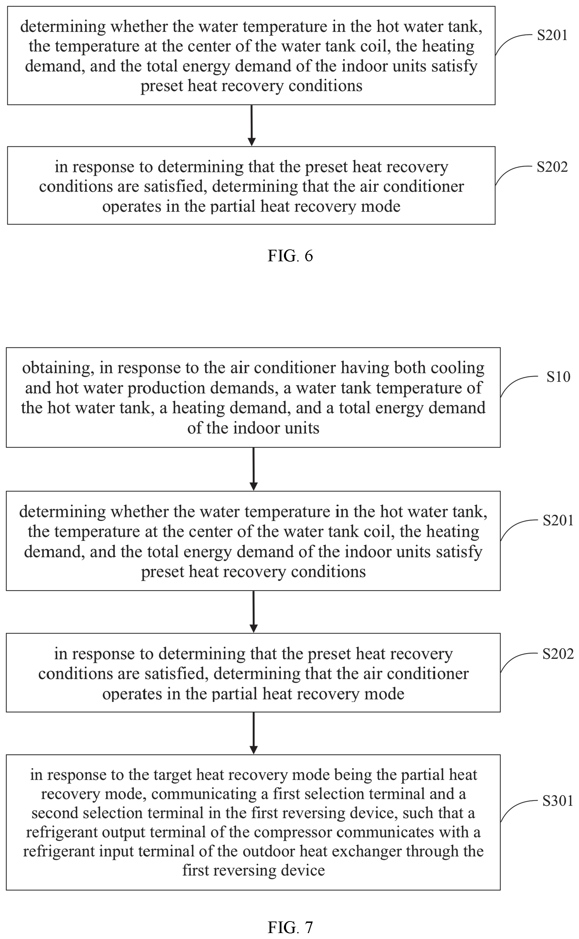

As shown in FIG. 6, FIG. 6 is a flowchart of the method for controlling the air conditioner according to a second embodiment of the present application.

Based on the first embodiment described above, in an embodiment, step S20 includes:

Step S201, determining whether the water temperature in the hot water tank, the temperature at the center of the water tank coil, the heating demand, and the total energy demand of the indoor units satisfy preset heat recovery conditions.

It should be noted that preset heat recovery conditions include at least one of the following conditions: a water temperature in the hot water tank being greater than a preset first temperature threshold; a temperature at a center of a water tank coil being greater than or equal to a preset coil temperature; and a target heating demand ratio being greater than or equal to a preset demand ratio. The target heating demand ratio is a ratio between a total energy demand of the indoor units and a heating demand. No limitation is imposed in this embodiment.

A value range of the preset first temperature threshold is 48°C to 56°C, for example, 53°C. A value range of the preset coil temperature is 57°C to 63°C, for example, 60°C. A value range of the preset demand ratio is 1 to 2.5, for example, 1.8. No limitation is imposed in this embodiment.

Step S202, in response to determining that the preset heat recovery conditions are satisfied, determining that the air conditioner operates in the partial heat recovery mode.

In an embodiment, when the water temperature in the hot water tank is greater than or equal to 53°C, or the temperature at the center of the water tank coil is greater than or equal to 60°C, or a ratio between the total energy demand of the indoor units and the heating demand is greater than or equal to 1.8, the air conditioner operates in the partial heat recovery mode.

Furthermore, when the water temperature in the hot water tank is lower than a preset second temperature threshold, the temperature at the center of the water tank coil is lower than the preset coil temperature, and a target heating demand ratio is lower than the preset demand ratio, it is determined that the air conditioner operates in the full heat recovery mode, where the preset second temperature threshold is lower than the preset first temperature threshold.

When the water temperature in the hot water tank is lower than the preset first temperature threshold and greater than or equal to the preset second temperature threshold, it is determined that the target heat recovery mode according to a heat recovery mode in a previous operation.

It may be understood that a value range of the preset second temperature threshold is 38°C to 48°C, for example, 45°C.

In an embodiment, when the water temperature in the hot water tank is less than or equal to 45°C, the temperature at the center of the water tank coil is less than 60°C, and a ratio between the total energy demand of the indoor units and the heating demand is less than 1.8, the air conditioner operates in the full heat recovery mode.

When the water temperature in the hot water tank is between 45°C and 53°C, a heat recovery mode of a previous operation is used. When the multi-split air conditioner is powered on for a first time and the water temperature in the hot water tank is between 45°C and 53°C, in an embodiment, the full heat recovery mode is used to simultaneously achieve hot water production and indoor cooling.

In an embodiment, when the multi-split air conditioner is adjusted from the partial heat recovery mode to the full heat recovery mode, conditions that the water temperature in the hot water tank is lower than the preset second temperature threshold, the temperature at the center of the water tank coil is lower than the preset coil temperature, and the target heating demand ratio is lower than the preset demand ratio are satisfied, and, additionally, within a preset duration, a highest water temperature detected in the hot water tank is less than or equal to a preset threshold. The preset threshold is related to a highest water temperature K of the hot water tank detected in real time after a four-way valve A is powered off, where the preset duration is 5 min.

In an embodiment, when the multi-split air conditioner is adjusted from the partial heat recovery mode to the full heat recovery mode, conditions that the water temperature in the hot water tank is less than or equal to 45°C, the temperature at the center of the water tank coil is less than 60°C, and a ratio between the total energy demand of the indoor units and the heating demand is less than 1.8 are satisfied, and a highest water temperature of the hot water tank is continuously detected to be less than or equal to K-5 for 5 min, the air conditioner operates in the full heat recovery mode.

In an embodiment, a heat recovery mode of the multi-split air conditioner is determined according to the water temperature in the hot water tank, the temperature at the center of the water tank coil, the heating demand, and the total energy demand of the indoor units, so as to improve heat recovery efficiency and enhance effects of simultaneous cooling and hot water production of the multi-split air conditioner.

As shown in FIG. 7, FIG. 7 is a flowchart of the method for controlling the air conditioner according to a third embodiment of the present application.

Based on the second embodiment described above, the step S30 includes:

Step S301, in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger through the first reversing device.

This embodiment relates to heat recovery control of a multi-split air conditioner in which only two reversing devices are provided. When two reversing devices are arranged in the outdoor unit, the reversing devices include a first reversing device and a second reversing device. The first reversing device is connected to the compressor, the outdoor heat exchanger, and the hot water tank respectively. The second reversing device is connected to the compressor, the indoor heat exchanger, and the hot water tank respectively.

It may be understood that a first selection terminal of the first reversing device refers to selection terminal D of the first four-way valve, and a second selection terminal refers to selection terminal C of the first four-way valve. In the partial heat recovery mode, communicating selection terminal D and selection terminal C of the first four-way valve causes a refrigerant output terminal of the compressor to communicate with a refrigerant input terminal of the outdoor heat exchanger through the first reversing device, so that a portion of refrigerant flows through the first four-way valve and passes through the outdoor heat exchanger for heat exchange.

At this time, the third selection terminal and the fourth selection terminal in the second reversing device are further communicated, so that a refrigerant input terminal of the compressor is communicated with a refrigerant output terminal of the indoor heat exchanger through the second reversing device.

The third selection terminal and the fourth selection terminal in the second reversing device refer to selection terminal S and selection terminal E of the second four-way valve respectively, so that refrigerant that has passed through the indoor heat exchanger and the hot water tank flows back to the compressor, thereby facilitating a subsequent refrigerant compression.

In an embodiment, when the target heat recovery mode is the full heat recovery mode, a second selection terminal and a third selection terminal in the first reversing device are communicated, so that a refrigerant input terminal of the compressor is communicated with a refrigerant output terminal of the outdoor heat exchanger through the first reversing device.

The second selection terminal and the third selection terminal of the first reversing device refer to selection terminal C and selection terminal S of the first four-way valve respectively. In the full heat recovery mode, communicating selection terminal C and selection terminal S of the first four-way valve causes refrigerant output from the compressor to flow only through the hot water tank for heating, thereby improving a heating effect of the hot water tank and avoiding a situation in which hot water production capability is poor due to insufficient heat recovery of the multi-split air conditioner.

In an embodiment, by defining communication states of reversing devices under different heat recovery modes when two reversing devices are provided in the multi-split air conditioner, heat recovery under different modes is achieved, heat recovery efficiency is improved, and use requirements of users under different scenarios are satisfied.

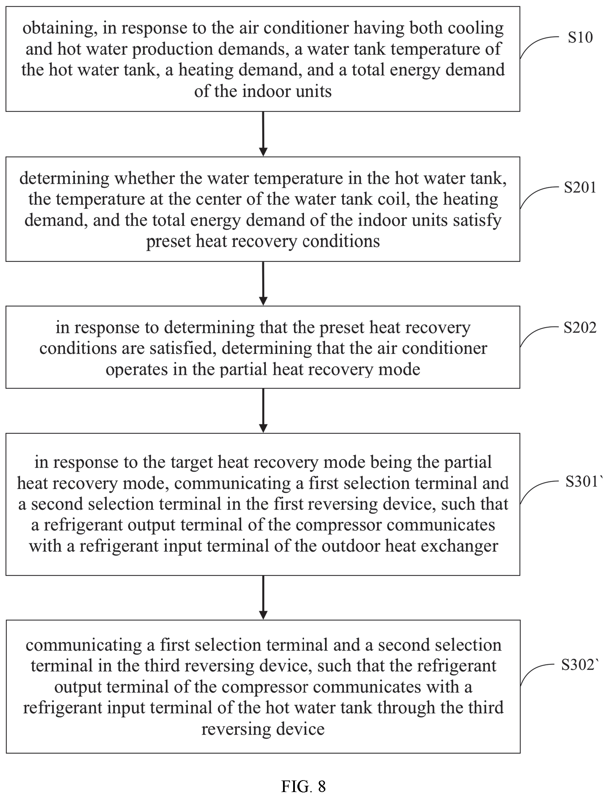

As shown in FIG. 8, FIG. 8 is a flowchart of the method for controlling the air conditioner according to a fourth embodiment of the present application.

Based on the third embodiment described above, the step S30 further includes:

Step S301', in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger.

It should be noted that, when the multi-split air conditioner having two reversing devices operates in the partial heat recovery mode, since a refrigerant output terminal of the compressor is directly communicated with the hot water tank, high-temperature and high-pressure refrigerant is output to the hot water tank regardless of how communication states of the reversing devices are switched. As a result, a water temperature of the hot water tank continues to increase, and a situation in which the water temperature is excessively high and does not meet user requirements occurs. In such a case, the water temperature of the hot water tank can only be controlled by shutting down a heat pump system of the multi-split air conditioner. Therefore, in an embodiment, a solution of providing three reversing devices in the multi-split air conditioner is proposed.

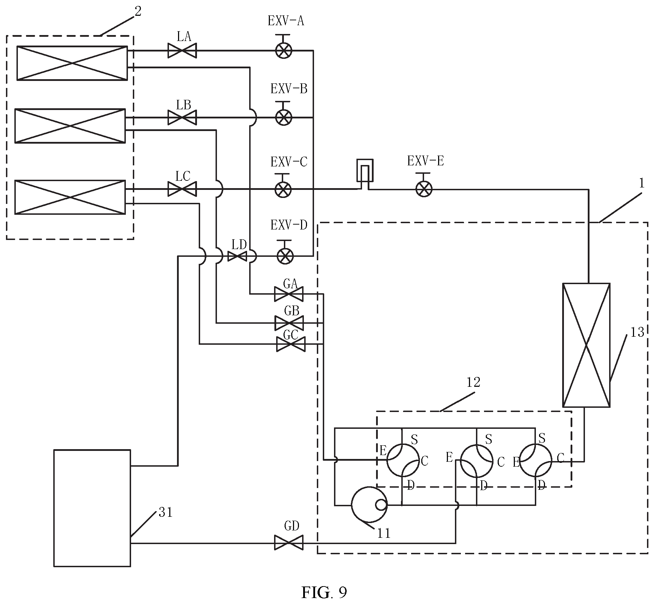

It should be noted that this embodiment relates to heat recovery control of a multi-split air conditioner in which three reversing devices are provided. As shown in FIG. 9, when three reversing devices are arranged in the outdoor unit, the reversing devices include a first reversing device, a second reversing device, and a third reversing device. The first reversing device is connected to the compressor and the outdoor heat exchanger respectively. The second reversing device is connected to the compressor and the indoor heat exchanger respectively. The third reversing device is connected to the compressor and the hot water tank respectively.

It may be understood that a first selection terminal and a second selection terminal of the first reversing device refer to selection terminal D and selection terminal C of the first four-way valve respectively, and a first selection terminal and a second selection terminal of the third reversing device refer to selection terminal D and selection terminal E respectively. In the partial heat recovery mode, communicating selection terminal D and selection terminal C of the first four-way valve causes a refrigerant output terminal of the compressor to communicate with a refrigerant input terminal of the outdoor heat exchanger through the first reversing device, so that a portion of refrigerant flows through the first four-way valve and passes through the outdoor heat exchanger for heat exchange.

Step S302', communicating a first selection terminal and a second selection terminal in the third reversing device, such that the refrigerant output terminal of the compressor communicates with a refrigerant input terminal of the hot water tank through the third reversing device.

As described above, in the partial heat recovery mode, one portion of refrigerant flows through the outdoor heat exchanger via the first four-way valve to perform heat exchange, thereby forming a first refrigerant flow path, and another portion is output to the hot water tank through a first selection terminal and a second selection terminal of the third reversing device, that is, through selection terminal D and selection terminal E of the third four-way valve, to perform heat exchange. In an embodiment, when heating of the hot water tank is to be stopped, a communication state of the third four-way valve is adjusted to reduce hot water production capability, thereby improving user experience.

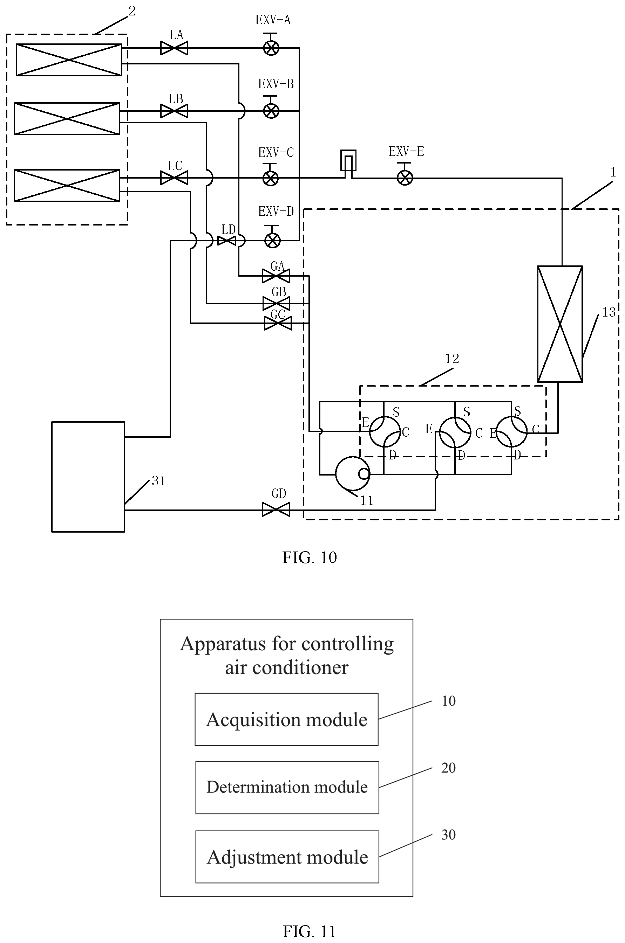

As shown in FIG. 10, when the multi-split air conditioner operates in the full heat recovery mode, that is, in response to the target heat recovery mode being the full heat recovery mode, the second selection terminal and the third selection terminal in the first reversing device are communicated, such that a refrigerant input terminal of the compressor communicates with a refrigerant output terminal of the outdoor heat exchanger through the first reversing device.

The second selection terminal and the third selection terminal in the third reversing device are communicated, such that a refrigerant output terminal of the compressor communicates with a refrigerant input terminal of the hot water tank through the third reversing device.

It can be understood that, in both the full heat recovery mode and the partial heat recovery mode, high-temperature and high-pressure refrigerant is required to flow through the hot water tank, and therefore no adjustment of a communication state of the third reversing device is required. In response to detecting that a water temperature of the hot water tank is relatively high, or greater than a temperature set by a user, the third reversing device can be controlled to communicate a second selection terminal and a third selection terminal, thereby preventing the high-temperature and high-pressure refrigerant from entering the hot water tank for hot water production. The second selection terminal and the third selection terminal of the third reversing device are the selection terminal E and the selection terminal S of the third four-way valve. In an embodiment, the selection terminal D and the selection terminal C can also be communicated. This embodiment is not limited thereto.

In an embodiment, by defining communication states of reversing devices under different heat recovery modes when the multi-split air conditioner includes three reversing devices, heat recovery under different modes is implemented, thereby improving heat recovery efficiency, satisfying user requirements in different application scenarios, and at the same time avoiding an excessively high water temperature of the hot water tank that affects user use.

In addition, the present application further provides a storage medium storing a program for controlling an air conditioner, when the program for controlling an air conditioner is executed by a processor, the steps of the method for controlling the air conditioner described above are implemented.

Since this storage medium adopts all the technical solutions of all the above embodiments, it has at least all the beneficial effects brought about by the technical solutions of the above embodiments, which will not be repeated here.

Referring to FIG. 11, FIG. 11 is a schematic block diagram of an apparatus for controlling the air conditioner according to a first embodiment of the present application.

As shown in FIG. 11, the apparatus for controlling the air conditioner provided in the embodiment of the present application includes:

an acquisition module 10, configured to obtain, in response to the air conditioner having both cooling and hot water production demands, a water tank temperature of the hot water tank, a heating demand, and a total energy demand of the indoor units;

a determination module 20, configured to determine a target heat recovery mode of the air conditioner according to the water tank temperature, the heating demand, and the total energy demand of the indoor units; and

an adjustment module 30, configured to adjust, according to the target heat recovery mode, a communication state of each reversing device and the throttling element, to adjust a refrigerant flow ratio between the hot water tank and the indoor heat exchanger.

In an embodiment, the determination module 20 is further configured to determine whether the water temperature in the hot water tank, the temperature at the center of the water tank coil, the heating demand, and the total energy demand of the indoor units satisfy preset heat recovery conditions, the preset heat recovery conditions including at least one of the following: the water temperature in the hot water tank being greater than a preset first temperature threshold, the temperature at the center of the water tank coil being greater than or equal to a preset coil temperature, and a target heating demand ratio being greater than or equal to a preset demand ratio, where the target heating demand ratio is a ratio of the total energy demand of the indoor units to the heating demand, and in response to determining that the preset heat recovery conditions are satisfied, determine that the air conditioner operates in the partial heat recovery mode.

In an embodiment, the determination module 20 is further configured to: in response to the water temperature in the hot water tank being lower than a preset second temperature threshold, the temperature at the center of the water tank coil being lower than the preset coil temperature, and a target heating demand ratio being lower than the preset demand ratio, determine that the air conditioner operates in the full heat recovery mode, where the preset second temperature threshold is lower than the preset first temperature threshold; in response to the water temperature in the hot water tank being lower than the preset first temperature threshold and greater than or equal to the preset second temperature threshold, determine the target heat recovery mode according to a heat recovery mode in a previous operation.

In an embodiment, the determination module 20 is further configured to in response to the target heat recovery mode being the partial heat recovery mode, communicate a first selection terminal and a second selection terminal in the first reversing device, such that a refrigerant output terminal of the compressor communicates with a refrigerant input terminal of the outdoor heat exchanger through the first reversing device.

In an embodiment, the determination module 20 is further configured to in response to the target heat recovery mode being the full heat recovery mode, communicate a second selection terminal and a third selection terminal in the first reversing device, such that a refrigerant input terminal of the compressor communicates with a refrigerant output terminal of the outdoor heat exchanger through the first reversing device.

In an embodiment, the determination module 20 is further configured to, in response to the target heat recovery mode being the partial heat recovery mode, communicate a first selection terminal and a second selection terminal in the first reversing device, such that a refrigerant output terminal of the compressor communicates with a refrigerant input terminal of the outdoor heat exchanger; and communicate a first selection terminal and a second selection terminal in the third reversing device, such that the refrigerant output terminal of the compressor communicates with a refrigerant input terminal of the hot water tank through the third reversing device.

In an embodiment, the determination module 20 is further configured to, in response to the target heat recovery mode being the full heat recovery mode, communicate a second selection terminal and a third selection terminal in the first reversing device, such that a refrigerant input terminal of the compressor communicates with a refrigerant output terminal of the outdoor heat exchanger through the first reversing device; and communicate a first selection terminal and a second selection terminal in the third reversing device, such that the refrigerant output terminal of the compressor communicates with a refrigerant input terminal of the hot water tank through the third reversing device.

In the embodiment, when the multi-split air conditioner has both cooling and hot water production demands, a mode determination is performed according to an obtained water tank temperature of the hot water tank, a heating demand, and a total energy demand of the indoor units, to determine a target heat recovery mode of the multi-split air conditioner, and then, according to the target heat recovery mode, a communication state of reversing devices and throttling elements is adjusted, so as to enable a single heat pump system to simultaneously perform cooling and hot water production, heat a water tank by waste heat from air conditioning cooling, avoid a technical problem in the prior art that heating and hot water production of a multi-split air conditioner cannot be performed simultaneously, and improve user experience.

Although the steps shown in the flowcharts of the embodiments of the present application are illustrated sequentially according to the arrows, the steps are not necessarily executed in the order indicated by the arrows. Unless explicitly stated herein, the execution of the steps is not strictly limited to a particular order, and the steps may be executed in other orders. Moreover, at least some of the steps shown in the drawings may include a plurality of sub-steps or a plurality of stages. The sub-steps or stages are not necessarily executed at the same time, but may be executed at different times, and the execution order thereof is not necessarily sequential, but may be alternately or intermittently executed with at least part of other steps or sub-steps or stages of other steps.

It should be understood that the above description is only illustrative and does not constitute any limitation on the technical solutions of the present application. In specific applications, those skilled in the art may make configurations according to actual needs, and the present application is not limited thereto.

It should be noted that the workflow described above is merely illustrative and does not limit the scope of protection of the present application. In practical applications, those skilled in the art may select part or all of the workflow according to actual needs to achieve the objectives of the solutions of the present embodiment, and no limitation is imposed herein.

In addition, technical details that are not described in detail in the present embodiment may refer to the method for controlling an air conditioner provided in any embodiment of the present application, and details are not repeated herein.

Furthermore, it should be noted that, in this document, the terms "include", "including", or any other variants thereof are intended to cover non-exclusive inclusion, such that a process, method, article, or system that includes a series of elements not only includes those elements but also includes other elements not expressly listed, or elements inherent to such a process, method, article, or system. Without further limitation, an element defined by the phrase "including one ..." does not exclude the presence of additional identical elements in a process, method, article, or system that includes the element.

The numbering of the embodiments described above is provided merely for descriptive purposes and does not represent the superiority or inferiority of the embodiments.

Through the description of the above embodiments, those skilled in the art can clearly understand that the methods in the above embodiments can be implemented by means of software in combination with necessary general hardware platforms, and can also be implemented by hardware. However, in many cases, the former is a preferable implementation manner. Based on such an understanding, the technical solutions of the present application, in essence or the parts contributing to the existing technology, can be embodied in the form of a software product. The computer software product is stored in a storage medium, such as a Read Only Memory (ROM), a RAM, a magnetic disk, or an optical disc, and includes a plurality of instructions for enabling a terminal device, which can be a mobile phone, a computer, a server, or a network device, to perform the methods described in the embodiments of the present application.

The foregoing are merely optional embodiments of the present application and are not intended to limit the patent scope of the present application. Any equivalent structural transformation or equivalent process transformation made by using the content of the description and drawings of the present application, or any direct or indirect application thereof in other related technical fields, shall fall within the patent protection scope of the present application.

**Claims**

1. A method for controlling an air conditioner, applied to a multi-split air conditioner, wherein:

   the multi-split air conditioner comprises an outdoor unit, a plurality of indoor units, and a hot water module, wherein:

   the outdoor unit is connected separately to each indoor unit and the hot water module, and a throttling element is provided between the outdoor unit and each indoor unit and between the outdoor unit and the hot water module;
   the outdoor unit comprises a compressor, an outdoor heat exchanger, and at least two reversing devices;
   each indoor unit comprises an indoor heat exchanger; and
   the hot water module comprises a hot water tank,
   wherein each reversing device is connected to the compressor for controlling a refrigerant flow direction; and

   the method for controlling the air conditioner comprises:

   obtaining, in response to the air conditioner having both cooling and hot water production demands, a water tank temperature of the hot water tank, a heating demand, and a total energy demand of the indoor units;
   determining a target heat recovery mode of the air conditioner according to the water tank temperature, the heating demand, and the total energy demand of the indoor units; and
   adjusting, according to the target heat recovery mode, a communication state of each reversing device and the throttling element, to adjust a refrigerant flow ratio between the hot water tank and the indoor heat exchanger.

2. The method for controlling the air conditioner according to claim 1, wherein the target heat recovery mode comprises a partial heat recovery mode, and the water tank temperature comprises a water temperature in the water tank and a temperature at a center of a water tank coil,
   wherein the determining the target heat recovery mode of the air conditioner according to the water tank temperature, the heating demand, and the total energy demand of the indoor units comprises:

   determining whether the water temperature in the hot water tank, the temperature at the center of the water tank coil, the heating demand, and the total energy demand of the indoor units satisfy preset heat recovery conditions, the preset heat recovery conditions comprising at least one of the following: the water temperature in the hot water tank being greater than a preset first temperature threshold, the temperature at the center of the water tank coil being greater than or equal to a preset coil temperature, and a target heating demand ratio being greater than or equal to a preset demand ratio, wherein the target heating demand ratio is a ratio of the total energy demand of the indoor units to the heating demand; and
   in response to determining that the preset heat recovery conditions are satisfied, determining that the air conditioner operates in the partial heat recovery mode.

3. The method for controlling the air conditioner according to claim 1, wherein the target heat recovery mode further comprises a full heat recovery mode,
   wherein the determining the target heat recovery mode of the air conditioner according to the water tank temperature, the heating demand, and the total energy demand of the indoor units further comprises:

   in response to the water temperature in the hot water tank being lower than a preset second temperature threshold, the temperature at the center of the water tank coil being lower than the preset coil temperature, and a target heating demand ratio being lower than the preset demand ratio, determining that the air conditioner operates in the full heat recovery mode, wherein the preset second temperature threshold is lower than the preset first temperature threshold; and
   in response to the water temperature in the hot water tank being lower than the preset first temperature threshold and greater than or equal to the preset second temperature threshold, determining the target heat recovery mode according to a heat recovery mode in a previous operation.

4. The method for controlling the air conditioner according to any one of claims 1 to 3, wherein when two reversing devices are provided in the outdoor unit, the reversing devices comprise a first reversing device and a second reversing device, wherein the first reversing device is connected separately to the compressor, the outdoor heat exchanger, and the hot water tank, and the second reversing device is connected separately to the compressor, the indoor heat exchanger, and the hot water tank,

wherein the adjusting the communication state of each reversing device according to the target heat recovery mode comprises:

in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger through the first reversing device.

5. The method for controlling the air conditioner according to claim 4, further comprising:

in response to the target heat recovery mode being the full heat recovery mode, communicating a second selection terminal and a third selection terminal in the first reversing device, such that a refrigerant input terminal of the compressor communicates with a refrigerant output terminal of the outdoor heat exchanger through the first reversing device.

6. The method for controlling the air conditioner according to any one of claims 1 to 3, wherein when three reversing devices are provided in the outdoor unit, the reversing devices comprise a first reversing device, a second reversing device, and a third reversing device, wherein the first reversing device is connected separately to the compressor and the outdoor heat exchanger, the second reversing device is connected separately to the compressor and the indoor heat exchanger, and the third reversing device is connected separately to the compressor and the hot water tank, wherein the adjusting the communication state of each reversing device according to the target heat recovery mode further comprises:

in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger; and communicating a first selection terminal and a second selection terminal in the third reversing device, such that the refrigerant output terminal of the compressor communicates with a refrigerant input terminal of the hot water tank through the third reversing device.

7. The method for controlling the air conditioner according to claim 6, further comprising:

in response to the target heat recovery mode being the full heat recovery mode, communicating a second selection terminal and a third selection terminal in the first reversing device, such that a refrigerant input terminal of the compressor communicates with a refrigerant output terminal of the outdoor heat exchanger through the first reversing device; and communicating a first selection terminal and a second selection terminal in the third reversing device, such that the refrigerant output terminal of the compressor communicates with a refrigerant input terminal of the hot water tank through the third reversing device.

8. An apparatus for controlling an air conditioner, comprising:

an acquisition module configured to obtain, in response to the air conditioner having both cooling and hot water production demands, a water tank temperature of a hot water tank, a heating demand, and a total energy demand of indoor units;
a determination module configured to determine a target heat recovery mode of the air conditioner according to the water tank temperature, the heating demand, and the total energy demand of the indoor units; and
an adjustment module configured to adjust, according to the target heat recovery mode, a communication state of each reversing device and a throttling element, to adjust a refrigerant flow ratio between a hot water tank and an indoor heat exchanger.

9. A multi-split air conditioner, comprising: a memory, a processor, and a program for controlling an air conditioner stored in the memory and executable by the processor, wherein the program for controlling an air conditioner is configured to implement the method for controlling the air conditioner according to any one of claims 1 to 7.

**10.** A storage medium, having a program stored thereon for controlling an air conditioner, wherein the program for controlling the air conditioner, when executed by a processor, implements the method for controlling the air conditioner according to any one of claims 1 to 7.

1005

1001

processor

1002

1003

user interface

1004

network interface

operating system

network communication module

user interface module

program for controlling air conditioner

memory

FIG. 1

obtaining, in response to the air conditioner having both cooling and hot water production demands, a water tank temperature of the hot water tank, a heating demand, and a total energy demand of the indoor units — S10

determining a target heat recovery mode of the air conditioner according to the water tank temperature, the heating demand, and the total energy demand of the indoor units — S20

adjusting, according to the target heat recovery mode, a communication state of each reversing device and the throttling element, to adjust a refrigerant flow ratio between the hot water tank and the indoor heat exchanger — S30

FIG. 2

EP 4 752 451 A1

FIG. 3

17

FIG. 4

FIG. 5

determining whether the water temperature in the hot water tank, the temperature at the center of the water tank coil, the heating demand, and the total energy demand of the indoor units satisfy preset heat recovery conditions ⌐ S201

in response to determining that the preset heat recovery conditions are satisfied, determining that the air conditioner operates in the partial heat recovery mode ⌐ S202

FIG. 6

obtaining, in response to the air conditioner having both cooling and hot water production demands, a water tank temperature of the hot water tank, a heating demand, and a total energy demand of the indoor units ⌐ S10

determining whether the water temperature in the hot water tank, the temperature at the center of the water tank coil, the heating demand, and the total energy demand of the indoor units satisfy preset heat recovery conditions ⌐ S201

in response to determining that the preset heat recovery conditions are satisfied, determining that the air conditioner operates in the partial heat recovery mode ⌐ S202

in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger through the first reversing device ⌐ S301

FIG. 7

obtaining, in response to the air conditioner having both cooling and hot water production demands, a water tank temperature of the hot water tank, a heating demand, and a total energy demand of the indoor units — S10

determining whether the water temperature in the hot water tank, the temperature at the center of the water tank coil, the heating demand, and the total energy demand of the indoor units satisfy preset heat recovery conditions — S201

in response to determining that the preset heat recovery conditions are satisfied, determining that the air conditioner operates in the partial heat recovery mode — S202

in response to the target heat recovery mode being the partial heat recovery mode, communicating a first selection terminal and a second selection terminal in the first reversing device, such that a refrigerant output terminal of the compressor communicates with a refrigerant input terminal of the outdoor heat exchanger — S301`

communicating a first selection terminal and a second selection terminal in the third reversing device, such that the refrigerant output terminal of the compressor communicates with a refrigerant input terminal of the hot water tank through the third reversing device — S302`

FIG. 8

FIG. 9

FIG. 10

FIG. 11

# EP 4 752 451 A1

## INTERNATIONAL SEARCH REPORT

| International application No. |
|---|
| **PCT/CN2024/090973** |

### A. CLASSIFICATION OF SUBJECT MATTER

F24F11/65(2018.01)i; F24F11/64(2018.01)i; F24F12/00(2006.01)i; F24F5/00(2006.01)i; F25B13/00(2006.01)i; F25B29/00(2006.01)i; F24H4/02(2022.01)i; F24H15/429(2022.01)i

According to International Patent Classification (IPC) or to both national classification and IPC

### B. FIELDS SEARCHED

Minimum documentation searched (classification system followed by classification symbols)

IPC: F24F, F25B, F24H

Documentation searched other than minimum documentation to the extent that such documents are included in the fields searched

Electronic data base consulted during the international search (name of data base and, where practicable, search terms used)

CNKI, CNTXT, VEN: 空调, 多联机, 热水, 换向装置, 两个, 节流单元, 水箱, 制冷, 水箱温度, 制热能需, 总能需, 目标回收模式, 流向比例, air conditioner, VRV, hot water, reversing valve, two, throttle, tank, refrigeration, temperature, heating energy demand, total energy demand, target heat recovery mode, flow ratio

### C. DOCUMENTS CONSIDERED TO BE RELEVANT

| Category* | Citation of document, with indication, where appropriate, of the relevant passages | Relevant to claim No. |
|---|---|---|
| PX | CN 117109144 A (GUANGDONG MEDIA REFRIGERATION EQUIPMENT CO., LTD. et al.) 24 November 2023 (2023-11-24) claims 1-10 | 1-10 |
| A | CN 102168898 A (UNIVERSITY OF SHANGHAI FOR SCIENCE AND TECHNOLOGY) 31 August 2011 (2011-08-31) description, paragraphs [0022]-[0034], and figure 1 | 1-10 |
| A | CN 107166595 A (WUHAN REFRIGERATION EQUIPMENT CO., LTD. OF MIDEA GROUP et al.) 15 September 2017 (2017-09-15) entire document | 1-10 |
| A | CN 201503166 U (SHANGHAI YUANZHI ELECTROMECHANICAL TECHNOLOGY CO., LTD.) 09 June 2010 (2010-06-09) entire document | 1-10 |
| A | CN 102116515 A (ZHUHAI GREE ELECTRIC APPLIANCES INC.) 06 July 2011 (2011-07-06) entire document | 1-10 |

☑ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **02 August 2024** | **09 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/090973** |

| C. | DOCUMENTS CONSIDERED TO BE RELEVANT | |
|---|---|---|
| Category* | Citation of document, with indication, where appropriate, of the relevant passages | Relevant to claim No. |
| A | CN 108507125 A (QINGDAO HAIER AIR-CONDITIONER ELECTRIC CO., LTD.) 07 September 2018 (2018-09-07) entire document | 1-10 |
| A | KR 20180039862 A (LG ELECTRONICS INC.) 19 April 2018 (2018-04-19) entire document | 1-10 |

Form PCT/ISA/210 (second sheet) (July 2022)

**INTERNATIONAL SEARCH REPORT**
Information on patent family members

| International application No. |
| PCT/CN2024/090973 |

| Patent document cited in search report | | | Publication date (day/month/year) | Patent family member(s) | Publication date (day/month/year) |
|---|---|---|---|---|---|
| CN | 117109144 | A | 24 November 2023 | None | |
| CN | 102168898 | A | 31 August 2011 | None | |
| CN | 107166595 | A | 15 September 2017 | None | |
| CN | 201503166 | U | 09 June 2010 | None | |
| CN | 102116515 | A | 06 July 2011 | None | |
| CN | 108507125 | A | 07 September 2018 | None | |
| KR | 20180039862 | A | 19 April 2018 | None | |

Form PCT/ISA/210 (patent family annex) (July 2022)

**EP 4 752 451 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310988387